# EUROPEAN PATENT APPLICATION

(11) **EP 2 018 065 A1**
(43) Date of publication of application: **21.01.2009**
(21) Application number: 07742045.3
(22) Date of filing: 20.04.2007
(51) Int. Cl.: H04N 7/18, H04N 5/225, H04N 5/765, H04N 5/91, H04N 5/915, H04N 5/93

(54) **CAMERA APPARATUS AND IMAGE RECORDING/REPRODUCING METHOD**

(30) Priority: 26.04.2006 JP 2006121594
(71) Applicant: Opt Corporation, Chino-shi, Nagano 391-0013 (JP)
(72) Inventor: OGAWA, Tatsuro, Chino-shi Nagano 391-0013 (JP)
(74) Representative: Schäfer, Matthias W.
(86) International application number: PCT/JP2007/058610
(87) International publication number: WO 2007/125825

(57) **Abstract**

Provided is a camera apparatus capable of recording an image where a wide range is photographed, and making it easier to distinguish a content of a necessary image by enlarging and displaying an image of a narrow range based on predetermined information. The camera apparatus includes: a camera section (200) including a wide-angle photographic lens (221) and image-pickup means (230); microphones (311, 312, 313) for collecting a sound emitted from a subject and/or sounds around the subject; processing control means (240) for recording image data subjected to the image processing and the sounds collected by the microphone (311) and the like; display means (300) including a display screen for displaying a picture of the image data subjected to the image processing as well as reproducing the collected sounds; and operation means (400) for operating the display screen. The processing control means (240) performs a processing of recording an entirety of the picked-up image and a processing of displaying the picture on the display means (300) by cutting out a specific area or an area toward a direction from which a sound is coming based on the collected sounds or other information from the entirety of the image obtained by photographing.

## Description

### Technical Field

The present invention relates to a camera apparatus using a wide-angle photographic lens and an image recording/reproducing method.

### Background Art

Up to now, monitoring systems have been employed by banks, convenience stores, or other such stores, as countermeasures against crimes such as burglary, theft, and sneak theft. The monitoring systems include a camera apparatus for photographing the inside of the stores. A recent increase in the crimes has started to bring about a gain in popularity of the monitoring systems even at general households. There is a demand that the camera apparatus used in such a monitoring systembe able to photograph with a wide photographic angle of view in order to photograph a monitoring range without a blind spot. As a camera apparatus having a wide photographic angle of view, a camera apparatus using an omnidirectional image-pickup lens is disclosed in, for example, Patent Document 1.

Patent Document 1: JP 2003-303335 A

### Disclosure of the Invention

### Problem to be solved by the Invention

However, an image in which a wide range is photographed raises such a problem that even if it is desired to constantly watch only a part of the image, for example, an image of an area toward a direction from which a sound is coming, the area is only a part of the image in which the wide range is photographed, and is low in resolution as well as hard to watch, making it difficult to distinguish a content of the image. The problem becomes significant in a case where changes are taking place in the area whose observation is being desired.

It is therefore an object of the present invention to provide a camera apparatus and an image recording/reproducing method, which are capable of recording an image in which a wide range is photographed and make it easier to distinguish a content of a necessary image by displaying an image of a narrow range based on predetermined information.

### Means for solving the Problem

In order to solve the above-mentioned problem, a camera apparatus according to the present invention includes: a camera section including: a wide-angle photographic lens; and image-pickup means on which light from a subj ect transmitted through the wide-angle photographic lens is imaged; a microphone for collecting a sound emitted from the subject and/or sounds around the subject; processing control means for performing an image processing on image data on a picked-up image obtained by imaging the light on the image-pickup means, and recording the image data subjected to the image processing and the sounds collected by the microphone; display means including a display screen for displaying a picture of the image data subjected to the image processing by the processing control means as well as reproducing the collected sounds; and operation means for operating the display screen, in which the processing control means performs a processing of recording an entirety of the picked-up image and a processing of displaying the picture on the display means by cutting out a specific area or an area toward a direction from which a sound is coming based on the collected sounds or other information from the entirety of the image obtained by photographing.

By thus structuring and configuring the camera apparatus, it is possible to record an image in which a wide range is photographed, and it becomes easier to distinguish a content of a necessary image by displaying an image of a narrow range based on predetermined information.

According to another invention, additionally in the above-mentioned invention, the processing control means performs: a reduction picture generating processing of generating a reduction picture that is obtained by displaying the entirety of the picked-up image whose data amount is reduced in a partial area of the display screen; an enlargement picture generating processing of correcting a distortion due to the photographic lens for one or a plurality of parts of the picked-up image and generating an enlargement picture that is subjected to the cutting out and enlargement to become larger than the reduction picture; and control for displaying the reduction picture and the enlargement picture on the display screen. According to this invention, the enlargement picture whose distortion is corrected makes it possible to watch a detailed picture within the photographed range, while the reduction picture makes it possible to watch an overall situation within a photographed range.

Further, according to another invention, additionally in the above-mentioned invention, the reduction picture is provided with a display indicating a range corresponding to the enlargement picture. By thus structuring and configuring the camera apparatus, since the reduction picture is provided with the display indicating the range corresponding to the enlargement picture, it is possible to easily confirm a positional relationship of the enlargement picture with respect to the reduction picture.

Further, according to another invention, additionally in the above-mentioned invention: the cut-out area includes at least 2 areas of: a tracking area that is the area toward the direction from which the sound is coming and that is subject to change in its area according to movement of the sound; and a direction-fixed area toward a direction that is fixed to a specific direction; and the areas are simultaneously displayed on the display screen. By thus structuring and configuring the camera apparatus, in a case of a conference, for example, a direction toward a blackboard and a speaker are set as the fixed area and the tracking area, respectively, to thereby make it possible to suitably display a situation of the conference and to save all of the areas as a record.

An image recording/reproducing method according to the present invention includes: a recording step of recording an entirety of a picked-up image obtained by photographing by using a wide-angle photographic lens and of recording a sound collected by a microphone; a cutout step of cutting out an area toward a direction from which the sound is coming based on the collected sounds from the entirety of the image obtained by photographing; and a display step of correcting a distortion for a limited image of the cut-out area and displaying the limited image as well as reproducing the sound.

With this image recording/reproducing method, it is possible to record an image in which a wide range is photographed, and by displaying an image of a narrow range based on a predetermined sound, it becomes easier to distinguish a content of an image of a place where the sound is produced, while it is possible to easily confirm a situation in which the sound is produced.

Further, according to another invention, additionally in the above-mentioned invention, the entirety of the image obtained by photographing corresponds to a circular image having a 360-degree perimeter, and the limited image corresponds to an enlargement image enlarged by an interpolation processing or the like. By employing such a method, the image data for the purpose of the enlargement picture can be set as image data only on the part corresponding to the enlargement picture among the image data on the picked-up image, and it is possible to reduce transfer time for the image data to be displayed. Accordingly, the display of the enlargement picture can be performed smoothly. Further, since the entire image is recorded, the area toward the direction from which the sound is coming can appropriately be displayed later.

### Effects of the Invention

According to the camera apparatus and the image recording/reproducing method according to the present invention, it is possible to record the image in which the wide range is photographed, and to display the image of the narrow range based on the predetermined information. Therefore, whenever desired, it is possible to watch an entirety of a photographed range and to watch a necessary part thereof as an image easy to distinguish.

### Brief Description of the Drawings

[FIG. 1] is a diagram illustrating an overall structure of a camera apparatus according to a first embodiment of the present invention.
[FIG. 2] is a perspective view illustrating a structure of a camera section of the camera apparatus of FIG. 1.
[FIG. 3] is a block diagram illustrating a configuration of the camera apparatus of FIG. 1.
[FIGS. 4] are diagrams illustrating a display mode of a picture on the camera apparatus of FIG. 1.
[FIGS. 5] are diagrams illustrating another display mode of a picture on the camera apparatus of FIG. 1.
[FIGS. 6] are diagrams illustrating another display mode of a picture on the camera apparatus of FIG. 1.
[FIG. 7] is a diagram illustrating a structure of a camera apparatus according to a second embodiment of the present invention.
[FIG. 8] is a block diagram illustrating a configuration of the camera apparatus of FIG. 7.

### Description of Reference Numerals

- 100: camera apparatus
- 201: microphone
- 221: photographic lens
- 230: image-pickup element (image-pickup means)
- 240: circuit device (processing control means)
- 300: monitor (display means)
- 311, 312, 313: microphone
- 320: enlargement picture
- 340: reduction picture
- 341: area display
- 343A: . area display
- 343B: area display
- 344A: area display
- 344B: area display
- 344C: area display
- 344D: area display
- 350: 2-way-split part picture (enlargement picture)
- 351: 2-way-split part picture (enlargement picture)
- 360: 4-way-split part picture (enlargement picture)
- 361: 4-way-split part picture (enlargement picture)
- 362: 4-way-split part picture (enlargement picture)
- 363: 4-way-split part picture (enlargement picture)
- 381A: 2-way-split part picture (enlargement picture)
- 381B: 2-way-split part picture (enlargement picture)
- 391A: 4-way-split part picture (enlargement picture)
- 391B: 4-way-split part picture (enlargement picture)
- 391C: 4-way-split part picture (enlargement picture)
- 391D: 4-way-split part picture (enlargement picture)
- 400: operation devices (operation means)
- 420: speaker

### Best Mode for carrying out the Invention

### (First Embodiment)

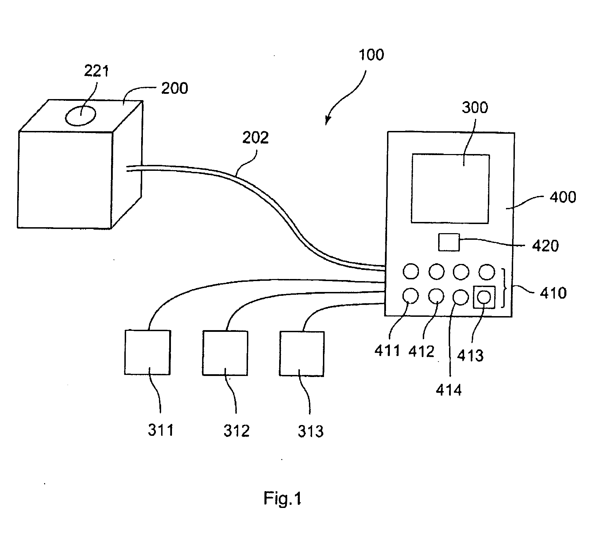

Description is made of a camera apparatus 100 according to a first embodiment of the present invention by referring to FIGS. 1 to 6. Note that an image recording/reproducing method is described along with an operation of the camera apparatus 100.

The camera apparatus 100 can be used as a conference-purpose camera or a monitor camera for a household or for an office, and can also be used as a camera apparatus for photographing for product inspection. In addition, the camera apparatus 100 can be used via communication means such as the Internet.

FIG. 1 illustrates a structure of an overall external appearance of the camera apparatus 100. The camera apparatus 100 includes a camera section 200, a monitor 300 serving as display means, three microphones 311, 312, and 313 having directivity, and an operation device 400 serving as operation means. In this embodiment, the monitor 300 is integrally mounted to the operation device 400. Displayed on the monitor 300 is an image obtained by photographing by the camera section 200. The operation device 400 is equipped with an operation switch 410 for operating the camera apparatus 100 such as for switching over a power switch of the camera apparatus 100 and display contents displayed on the monitor 300, a speaker 420, and the like.

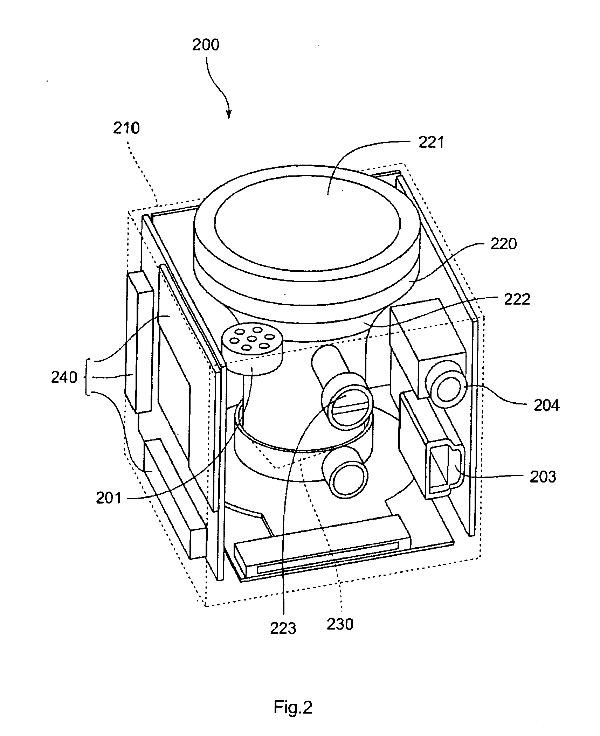

Next, FIG. 2 is referenced to describe a structure of the camera section 200. The camera section 200 includes an external casing 210 illustrated by the dotted lines of FIG. 2, an optical system 220, an image-pickup element 230 serving as image-pickup means, and a circuit device 240. The external casing 210 has a small shape exhibiting substantially a rectangular parallelepiped of 3 cm in all directions. The optical system 220 has a photographic lens 221 and a lens-barrel 222.

The optical system 220 has the lens-barrel 222 received inside the external casing 210, and has the photographic lens 221 exposed to an outside of the external casing 210. The photographic lens 221 is a so-called wide-angle lens having such an optical characteristic as a wide angle of view of 180 degrees or wider (approximately 200 degrees). On a front surface being a side from which light from a subject is incident, the photographic lens 221 exhibits a bulge approximately the same as that of an ordinary convex lens, which is close to a flat plane. However, glass inside a lens is elaborately processed to provide an angle of view of 180 degrees or wider, and can photograph over an entire perimeter about an optical axis, namely, a 360-degree perimeter.

An image-pickup element 230 is disposed in an imaging position of the photographic lens 221. For example, a complementary metal oxide semiconductor (CMOS) sensor is used as the image-pickup element 230. Instead of the CMOS sensor, a charge coupled device (CCD) sensor or other such photoelectric conversion element may be used.

The lens-barrel 222 is equipped with a focusing knob 223. The lens-barrel 222 is structured to move back and forth along the optical axis with respect to the image-pickup element 230 when the focusing knob 223 is held by fingers of a hand to be rotated about the optical axis. Therefore, the focusing knob 223 makes it possible to adjust a position in the optical axis of the photographic lens 221 so that the imaging position of the photographic lens 221 falls on an image-pickup surface of the image-pickup element 230.

In this embodiment, a size of the image-pickup element 230 and a layout of the image-pickup lens 221 and the image=pickup element 230 are set in such a manner that an entirety of an image obtained by imaging light coming through the photographic lens 221 is included within the image-pickup surface of the image-pickup element 230. Therefore, on the image-pickup surface of the image-pickup element 230, a circular image is obtained by the imaging in correspondence with a shape of the photographic lens 221.

Further, the camera section 200 includes a microphone 201, a universal serial bus (USB) connection section 203 to which a USB cable 202 serving as communication means is connected, and an AV signal outputting section 204 for outputting an audio signal and a video signal.

The microphones 201 and 311, 312, and 313 capture a sound in a place within a range being photographed. In other words, the microphones 201 and 311, 312, and 313 collect a sound emitted from the subject and sounds around the subject. The camera section 200 and the operation device 400 are communicably connected to each other via the USB cable 202 connected to the USB connection section 203. The AV signal outputting section 204 is used for outputting image data from a camera section 200 side and sound signals collected by the microphones 201 and 311, 312, and 313 to the monitor 300 and the speaker 420, respectively.

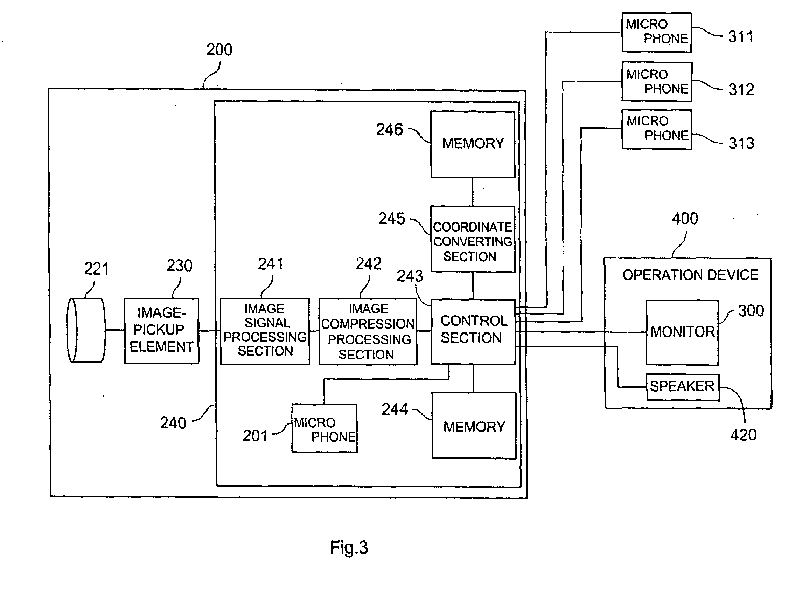

FIG. 3 illustrates, as a block diagram, a configuration of the circuit device 240 serving as processing control means and an overall configuration of the camera apparatus 100. FIG. 3 is referenced to describe the operation of the camera apparatus 100 and the like. Further, the circuit device 240 can be configured as an image processing device.

Light from the subject transmitted through the photographic lens 221 is imaged on the image-pickup surface of the image-pickup element 230, and an image signal based on an image obtained by the imaging is output from the image-pickup element 230. The image signal output from the image-pickup element 230 is input to the circuit device 240. The circuit device 240 includes, in addition to the microphone 201, an image signal processing section 241, an image compression processing section 242, a control section 243, a memory 244 provided to the control section 243, a coordinate converting section 245, and a memory 246 provided to the coordinate converting section 245.

The image signal output from the image-pickup element 230 is input to the image signal processing section 241. In the image signal processing section 241, the image signal output from the image-pickup element 230 is subjected to a predetermined image processing such as a color processing.

In the image compression processing section 242, image data on the image signal that has been subjected to the image processing in the image signal processing section 241 is subjected to a compression processing to generate compressed image data in which a data amount of the image data is reduced. The compression processing for the image data is performed by using, for example, joint photographic experts group (JPEG).

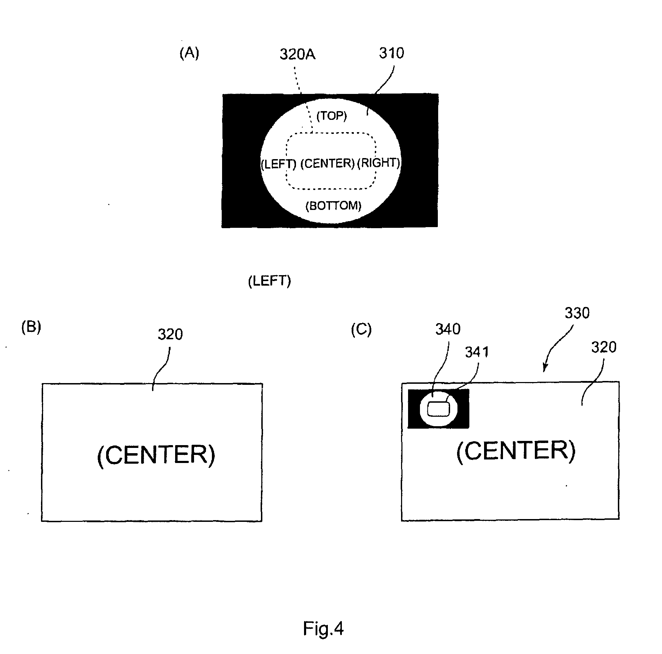

The control section 243 administers control on the operation of the camera apparatus 100, including: a generation processing for a picture corresponding to a display mode of a picture which is being obtained by photographing through the photographic lens 221 and which is to be displayed on the monitor 300; and reproduction of the sound signals. As illustrated in FIGS. 4 to 6 described later, the camera apparatus 100 of this embodiment can display the picture obtained by the photographing through the photographic lens 221 on the monitor 300 by selecting the display mode from a plurality of display modes different in content of the picture. The control section 243 performs the image processing for generating a picture to be displayed in each display mode from the image data on the image obtained by the photographing and a sound processing. The control section 243 is configured by, for example, a central processing unit (CPU).

The memory 244 not only contains a program for operating each section of the camera apparatus 100 but is also provided with a work memory for executing the program. For example, the image signal processing section 241 and image compression processing section 242 make use of the memory 244 for their processings. In addition, the memory 244 records sound signals of the signals collected by the microphones 201 and 311, 312, and 313, and at the same time, records an entire image (circular image) subjected to the compression processing by the image compression processing section 242. Note that in this embodiment, a direction from which a sound is coming, which is described later, is judged based on the sounds collected by the three microphones 311, 312, and 313, but the sound picked up by the microphone 201 may also be used to detect the direction from which the sound is coming.

The coordinate converting section 245 performs the image processing for generating a picture corresponding to each display mode based on the image data obtained from the image compression processing section 242 together with the control section 243. The coordinate converting section 245 has a function of converting a coordinate position of an image picked up on the image-pickup surface of the image-pickup element 230 into a coordinate position of a picture on the monitor 300 when the image picked up on the image-pickup surface of the image-pickup element 230 is to be subjected to the image processing so as to become a picture displayed in each display mode and is to be displayed on the monitor 300. The memory 246 is a work memory used for performing the image processing by using the coordinate converting section 245.

The monitor 300 displays a picture based on the image signal output from the circuit device 240. The monitor 300 is configured by, for example, a liquid display device, a CRT display device, or a plasma display device.

The operation device 400 is equipped with the operation switch 410 for operating the camera apparatus 100 such as for switching over the power switch of the camera apparatus 100 and the display contents displayed on the monitor 300, the speaker 420, and the like (referred to FIG. 1). Based on a content of an operation performed on the operation switch 410, the camera apparatus 100 is operated via the control section 243. An instruction of the operation switch 410 is transmitted to the control section 243, and a predetermined operation is executed. Note that the operation switch 410 is used for performing, for example, specification of a position for an area display described later.

The operation switch 410 includes amain selection button 411 and a sub-selection button 412 that are used for switching over the display modes of the picture obtained through the photographic lens 221 and displayed on the monitor 300. Hereinafter, description is made of: the picture modes of the picture on the monitor 300 which are switched over by depressing the main selection button 411 and the sub-selection button 412 when recording or reproduction is to be performed; and the content of the displayed picture.

The initial display mode, in which the picture obtained by the photographing through the photographic lens 221 is displayed after power to the camera apparatus 100 is turned on from a power-off state, is set to an entirety display mode for displaying an entirety picture 310 illustrated in FIG. 4(A). In this embodiment, the following description is made on the assumption that the camera section 200 is set above a table placed in the center of a conference room, and in the entirety picture 310 illustrated in FIG. 4(A), a top-to-bottom direction of the page corresponds to a front-to-back direction, respectively, of the conference room, while a left-to-right direction of the page corresponds to a left-to-right direction of the conference room. In addition, in the figures illustrating contents of the pictures described below, front, back, left, and right directions of a subject which are taken as the pictures are indicated by (TOP), (BOTTOM), (LEFT), and (RIGHT) , respectively. (CENTER) indicates the center of the front, back, left, and right directions, namely, indicates a position of the optical axis and positions about the optical axis.

In the entirety picture 310, the image obtained by the imaging through the photographic lens 221 on the image-pickup surface of the image-pickup element 230 is displayed as it is. As described above, the image obtained by the imaging through the photographic lens 221 has such a size as to be included within the image-pickup surface of the image-pickup element 230. Therefore, the image obtained by the imaging through the photographic lens 221 on the image-pickup surface of the image-pickup element 230 has a circular outline, while a part of the image-pickup surface other than a part on which the light is imaged becomes a dark part exposed to a small quantity of light. In this embodiment, the part of the image-pickup surface other than the part on which the image is obtained by the imaging through the photographic lens 221 is handled as having pixel data with a brightness of 0. Therefore, in the entirety picture 310, a picture of the image obtained by the imaging through the photographic lens 221 is displayed in a circular shape, while the other part is displayed in black. Note that the entirety picture 310 is a picture obtained by photographing with an angle of view of 200 degrees through the photographic lens 221, and is therefore a picture in which a so-called distortion aberration becomes higher in a position farther from the center and closer to the perimeter.

The entirety picture 310 is compressed by the image compression processing section 242, and then saved into the memory 244. The microphones 311, 312, and 313 are disposed around the camera section 200 at intervals of 120 degrees. The sounds collected by the microphones 311, 312, and 313 are subjected to a signal processing by the control section 243, and saved into the memory 244 as digital signals. The image and the sounds obtained during a conference are all saved into the memory 244. Note that when the conference comes to an end, by turning off the power to the camera apparatus 100, a recording operation and a recording step are ended. Note that instead of turning the power on/off to start/end recording, a recording button may be provided and depressed to start/end the recording.

After the end of the recording, when a scene of the conference is to be reproduced, the power to the camera apparatus 100 is turned on or a reproduction button (not shown) is depressed to thereby display the entirety picture 310 illustrated in FIG. 4(A) on the monitor 300. Hereinafter, description is made of operations performed during the reproduction, in other words, a cutout step and a display step.

By depressing the main selection button 411, the display of the monitor 300 can be switched from the entirety display mode for displaying the entirety picture 310 illustrated in FIG. 4(A) to an enlargement display mode for displaying an enlargement picture 320 illustrated in FIG. 4(B) and to a combination display mode I for displaying a combination picture 330 illustrated in FIG. 4 (C) The display modes are switched over each time the main selection button 411 is depressed in such an order as the entirety display mode (FIG. 4(A)) -> the enlargement display mode (FIG. 4(B)) -> the combination display mode I (FIG. 4 (C) ) -> the entirety display mode (FIG. 4 (A) ) .... Inotherwords, bydepressingthemainselection button 411, it is possible to select the three display modes, namely, the entirety display mode (FIG. 4 (A)), the enlargement display mode (FIG. 4(B)), and the combination display mode I (FIG. 4(C)).

The enlargement picture 320 in the enlargement display mode illustrated in FIG. 4(B) is an enlargement picture obtained by cutting out an area 320A of substantially a rectangle which is indicated by the dotted line in a central part of the entirety picture 310 illustrated in FIG. 4(A) (cutout step), and by subjecting a picture of the cut-out area to a correction processing of correcting the distortion aberration due to the photographic lens 221 and to an enlargement processing so as to be displayed in full on a display screen of the monitor 300. The area 320A is set so as to include a picture of a given subject within such a range that, for example, about the optical axis of the photographic lens 221, the angle of view in the top-to-bottom direction is 90 degrees while the angle of view in the left-to-right direction is 120 degrees. In other words, the picture of the enlargement picture 320 is a panoramic picture that extends along the left-to-right direction with the angle of view of 90 degrees in the top-to-bottom direction and the angle of view of 120 degrees in the left-to-right direction about the optical axis of the photographic lens 221. Note that various enlargement processing methods, such as an interpolation processing using a zero-order hold method, a linear interpolation method, or the like and an enlargement processing using a digital filter for non-integral multiple or integral multiple, can be appropriately employed as the above-mentioned enlargement processing as well as the following enlargement processings.

The enlargement picture 320 is generated based on the image data on the picked-up image corresponding to the area 320A part. In other words, the enlargement picture 320 is generated by performing an image processing such as the interpolation processing for pixel data on the image data on the part corresponding to the area 320A among the image data obtained by the image-pickup element 230 and output from the image compression processing section 242. By such an image processing, the enlargement picture 320 is generated as a picture obtained by subjecting the picked-up image of the part corresponding to the area 320A to the interpolation processing for a distortion aberration and the enlargement processing. Note that a part of the image data obtained by the image-pickup element 230 is cut out, and the enlargement picture 320 is generated based on the cut-out image data, and hence speed of the display processing is made higher, the picture displayed on the monitor 300 exhibiting less deterioration, than in a case where the enlargement picture 320 is generated from the picture data on the entirety picture 310.

The combination picture 330 in the combination display mode I illustrated in FIG. 4 (C) is a picture in which a reduction picture 340 obtained by reducing the entirety picture 310 is displayed on top left of the display screen of the monitor 300 in addition to the enlargement picture 320 illustrated in FIG. 4(B). The reduction picture 340 is generated by performing a thinning processing for pixel data or the like on the image data obtained by the image-pickup element 230 and output from the image compression processing section 242. The reduction picture 340 is generated by the thinning processing for pixel data, and hence an amount of the image data becomes smaller than a data amount of the entirety picture 310. This results in an increase in processing speed of each of processings performed on the reduction picture 340, such as transfer of image data on the reduction picture 340. Note that in addition to the above-mentioned thinning processing for pixel data, a method of reducing the image data on the reduction picture 340 may be performed by reducing image data on color information or the like. Further, when photographing is performed on the reduction picture 340, the image data may be reduced by lowering a frame rate for the photographing.

By displaying the enlargement picture 320 and the reduction picture 340 together on one screen, the reduction picture 340 makes it possible to watch an overall situation within a range photographed by the photographic lens 221, while the picture obtained by enlargement makes it possible to watch a detailed situation of the central part within the photographed range. Further, an area display 341 is overlaid on the reduction picture 340 to be displayed for a display indicating a range corresponding to the area 320A. The area display 341 being displayed makes it possible to know a positional relationship of the enlargement picture 320 with respect to the reduction picture 340.

In each of the display modes, namely, the entirety display mode (FIG. 4 (A) ) , the enlargement display mode (FIG. 4 (B) ) , and the combination display mode I (FIG. 4 (C) ) , further selection can be made by depressing the sub-selection button 412 from among a plurality of displaymodes for each of the displaymodes as described below.

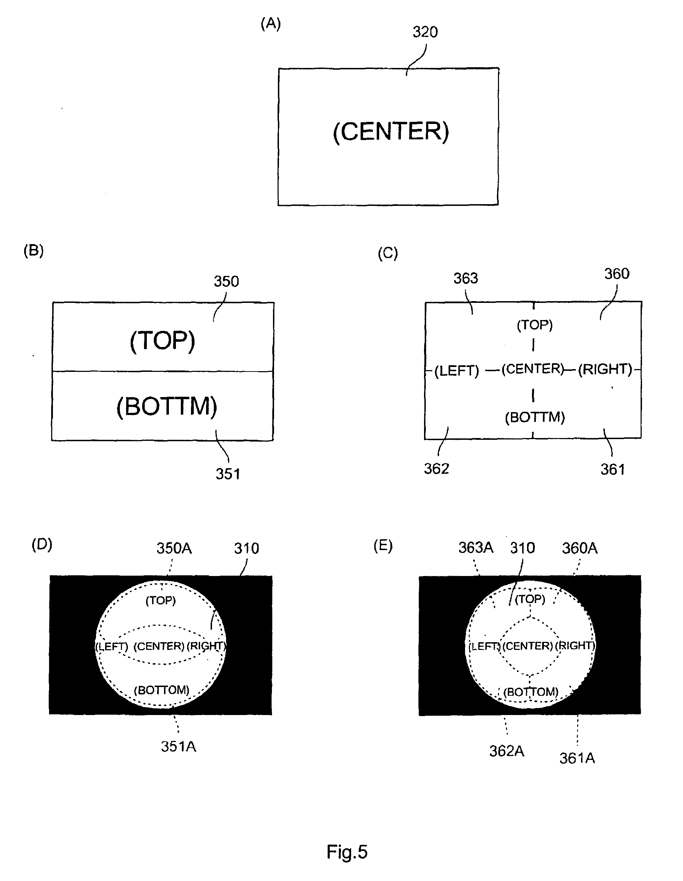

When the display mode of the monitor 300 is the entirety display mode (FIG. 4(A)), by depressing the sub-selection button 412 once, the display mode of the monitor 300 can be switched to the enlargement display mode for displaying the enlargement picture 320 illustrated in FIG. 5(A). The enlargement picture 320 illustrated in FIG. 5(A) is the same picture as the enlargement picture 320 illustrated in FIG. 4(B). In other words, when the sub-selection button 412 is depressed once in the entirety display mode (FIG. 4 (A) ) , the same enlargement picture 320 as that obtained when the main selection button 411 is depressed is displayed.

Then, when the sub-selection button 412 is again depressed, the display mode of the monitor 300 can be switched to a 2-way split display mode in which, as illustrated in FIG. 5 (B), two pictures, namely, 2-way-split part pictures 350 and 351 are displayed on top and bottom of the display screen of the monitor 300, respectively.

The 2-way-split part pictures 350 and 351 are pictures corresponding to areas 350A and 351A, respectively, each exhibiting substantially a fan shape of an arch shape indicated by the dotted line in the entirety picture 310 illustrated in FIG. 5(D). The 2-way-split part picture 350 is a picture which is obtained by cutting out the area 350A (cutout step) and which corresponds to a picture of the cut-out area, while the 2-way-split part picture 351 is a picture which is obtained by cutting out the area 351A (cutout step) and which corresponds to a picture of the cut-out area.

The areas 350A and 351A are set symmetrically on top and bottom positions with respect to the center of the entirety picture 310, and each area is set so as to include a picture of a given subject within such a range that, for example, the angle of view in the perimeter-to-center direction perpendicular to the optical axis of the photographic lens 221 is 60 degrees while the angle of view in the circumferential direction about the optical axis is 110 degrees. In other words, the pictures of the 2-way-split part pictures 350 and 351 are panoramic pictures that extend along the left-to-right direction with the angle of view of 60 degrees in the perimeter-to-center direction perpendicular to the optical axis of the photographic lens 221 and the angle of view of 110 degrees in the left-to-right direction in the top and the bottom positions that are symmetrical with respect to the optical axis of the photographic lens 221.

The 2-way-split part pictures 350 and 351 are obtained by cutting out the pictures of the areas 350A and 351A, respectively, (cutout step) and by subjecting the pictures of the cut-out areas to the correction processing of correcting the distortion aberration due to the photographic lens 221 and to the enlargement processing, and are displayed in full on top and bottom of the display screen of the monitor 300, respectively (display step). In the same manner as the above-mentioned enlargement picture 320, by performing the interpolation processing for pixel data or other such processing on the image data of the image-pickup element 230 output from the image compression processing section 242, the 2-way-split part pictures 350 and 351 are also generated as pictures obtained by subjecting the picked-up images of the parts corresponding to the areas 350A and 351A, respectively, to the interpolation processing for a distortion aberration and the enlargement processing. Therefore, the picture displayed on the monitor 300 exhibits less deterioration than in a case where the 2-way-split part pictures 350 and 351 are generated from the picture data on the entirety picture 310.

Further, when the sub-selection button 412 is again depressed, the display mode of the monitor 300 can be switched to a 4-way split display mode in which, as illustrated in FIG. 5(C), four pictures, namely, 4-way-split part pictures 360, 361, 362, and 363 are displayed on top, bottom, left, and right of the display screen of the monitor 300, respectively. The 4-way-split part pictures 360, 361, 362, and 363 are pictures obtained by cutting out areas 360A, 361A, 362A, and 363A, respectively, each exhibiting substantially a fan shape of an arch shape indicated by the dotted line, from the entirety picture 310 illustrated in FIG. 5(E) and by performing the enlargement processing thereon.

The 4-way-split part picture 360 corresponds to the area 360A, the 4-way-split part picture 361 corresponds to the area 361A, the 4-way-split part picture 362 corresponds to the area 362A, and the 4-way-split part picture 363 corresponds to the area 363A. The areas 360A, 361A, 362A, and 363A are areas set in 45-degree upper directions and 45-degree lower directions on left and right of the entirety picture 310 symmetrically with respect to the center thereof, and each area is set so as to include a picture of a given subject within such a range that, for example, the angle of view in a perimeter-to-center direction perpendicular to the optical axis of the photographic lens 221 is 50 degrees while the angle of view in a circumferential direction about the optical axis is 90 degrees.

In other words, the pictures of the 4-way-split part pictures 360, 361, 362, and 363 are panoramic pictures with the angle of view of 50 degrees in the perimeter-to-center direction perpendicular to the optical axis of the photographic lens 221 and the angle of view of 60 degrees in the left-to-right direction in positions toward the 45-degree upper directions and 45-degree lower directions on left and right of the photographic lens 221.

The 4-way-split part pictures 360, 361, 362, and 363 are enlargement pictures obtained by subjecting the pictures of the areas 360A, 361A, 362A, and 363A to the correction processing of correcting the distortion aberration due to the photographic lens 221 and to the enlargement processing so as to be displayed in full on top and bottom of the display screen of the monitor 300, respectively. In the same manner as the above-mentioned enlargement picture 320 or the 2-way-split part pictures 350 and 351, by performing the interpolation processing for pixel data or other such processing on the image data of the image-pickup element 230 output from the image compression processing section 242, the 4-way-split part pictures 360, 361, 362, and 363 are also generated as pictures obtained by subjecting the picked-up images of the parts corresponding to the areas 360A, 361A, 362A, and 363A, respectively, to the interpolation processing for a distortion aberration and the enlargement processing. Therefore, the picture displayed on the monitor 300 exhibits less deterioration than in a case where the 4-way-split part pictures 360, 361, 362, and 363 are generated from the picture data on the entirety picture 310.

Following the display mode of the 4-way split display mode, when the sub-selection button 412 is further again depressed, the display of the monitor 300 returns to the enlargement entirety display mode (FIG. 5 (A) ) . As described above, when the display mode of the monitor 300 is the entirety display mode (FIG. 4(A)), the display modes of the monitor 300 are switched over each time the sub-selection button 412 is depressed in such an order as the enlargement display mode (FIG. 5(A)) -> the 2-way split display mode (FIG. 5(B)) -> the 4-way split display mode I (FIG. 5(C)) -> the entirety display mode (FIG. 5(A))....

When the display mode of the monitor 300 is the enlargement display mode (FIG. 4(B)), by depressing the sub-selection button 412, the display mode of the monitor 300 can be switched to the 2-way split display mode illustrated in FIG. 5(B). Further, by depressing the sub-selection button 412 again, the display mode of the monitor 300 can be switched to the 4-way split display mode illustrated in FIG. 5 (C) . Following this display mode, when the sub-selection button 412 is further again depressed, the display mode of the monitor 300 becomes the entirety display mode illustrated in FIG. 5(A) for displaying the same picture as the enlargement picture 320 illustrated in FIG. 4(B).

In other words, when the display mode of the monitor 300 is the enlargement display mode (FIG. 4(B)), the display modes of the monitor 300 can be switched over each time the sub-selection button 412 is depressed in such an order as the 2-way split display mode (FIG. 5(B)) -> the 4-way split display mode (FIG. 5(C)) -> the entirety display mode (FIG. 5(A))....

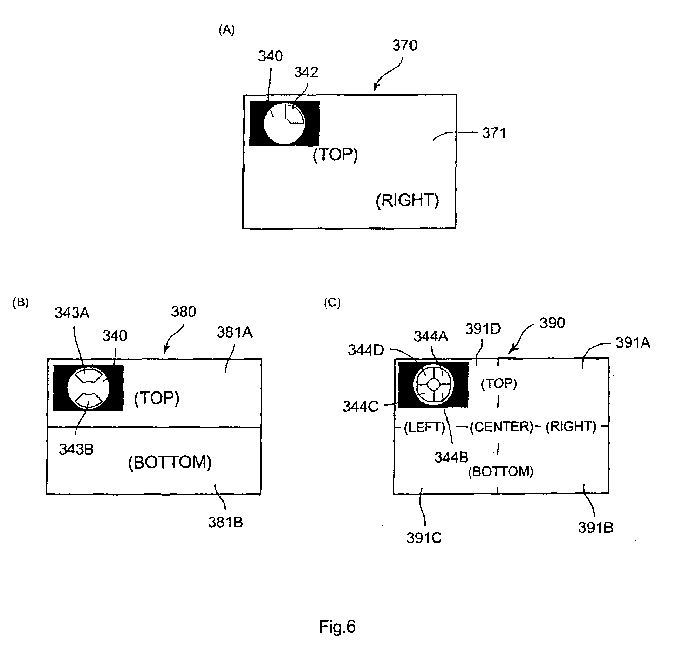

When the display mode of the monitor 300 is the combination display mode I (FIG. 4(C)) in which the combination picture 330 is displayed, by depressing the sub-selection button 412 once, the display modes of the monitor 300 can be switched over to a combination display mode II for displaying a combination picture 370 illustrated in FIG. 6(A). The combination picture 370 is a picture in which the reduction picture 340 and an enlargement picture 371 are displayed together. The enlargement picture 371 is a picture corresponding to an area specified by an area display 342 which is displayed by being overlaid on the reduction picture 340 and exhibits substantially a fan shape of an arch shape.

In the reduction picture 340, the area display 342 is set so as to include a picture of a given subject within such a range that, for example, the angle of view in the perimeter-to-center direction perpendicular to the optical axis of the photographic lens 221 is 50 degrees while the angle of view in the circumferential direction about the optical axis is 90 degrees. In other words, the picture of the enlargement picture 371 is a panoramic picture with the angle of view of 50 degrees in the perimeter-to-center direction perpendicular to the optical axis of the photographic lens 221 and the angle of view of 90 degrees in the left-to-right direction.

By a rotation operation of a ball-type switch 413, the area display 342 can be moved to an arbitrary position in a circumferential direction of the reduction picture 340. The enlargement picture 371 is obtained by cutting out an area specified by the area display 342 moved to a desired position by the operation of the ball-type switch 413 (cutout step) and by subjecting the picture of the cut-out area to the correction processing of correcting the distortion aberration due to the photographic lens 221 and to the enlargement processing, and is displayed in full on the display screen of the monitor 300 (display step).

Further, the area display 342 is generated not only by operating the ball-type switch 413 but also by depressing a sound tracking switch 414. In other words, when the sound tracking switch 414 is depressed, the control section 243 automatically displays an area, namely, the area display 342, toward a voice having the largest volume based on saved sound signals within the reduction picture 340, and at the same time, automatically displays the corresponding enlargement picture 371. The picture of the enlargement picture 371 is set to extend within a range of 45 degrees (90 degrees in total in the reduction picture 340) in the left and right directions across a direction from which a sound having the largest volume is coming. However, the range of the angle may be set to 60 degrees, 45 degrees, or the like instead of 90 degrees. Note that for extraction of the direction from which the sound having the largest volume is coming, a calculation is performed by the control section 243 based on the layout positions of the three microphones 311, 312, and 313 and the volumes of the sounds collected thereby.

In the same manner as the above-mentioned enlargement picture 320, by performing the interpolation processing for pixel data or other such processing on the image data of the image-pickup element 230 output from the image compression processing section 242, the enlargement picture 371 is generated as a picture obtained by subjecting the picked-up images of the part corresponding to the area display 342 to the interpolation processing for a distortion aberration and the enlargement processing. Therefore, the picture displayed on the monitor 300 exhibits less deterioration than in a case where the enlargement picture 371 is generated from the picture data on the reduction picture 340 generated by the thinning processing for pixel data.

The reduction picture 340 is displayed on top left of the display screen of the monitor 300. By displaying the enlargement picture 371 and the reduction picture 340 together on one screen, the reduction picture 340 makes it possible to watch an overall situation within a range photographed by the photographic lens 221, while the picture obtained by enlargement makes it possible to watch a detailed situation of the photographed range of the area display 342. Further, the area display 342 being displayed makes it possible to know a positional relationship of the enlargement picture 371 with respect to the reduction picture 340. The area display 342 and the enlargement picture 371 can be changed by operating the ball-type switch 413.

Further, by depressing the sound tracking switch 414, when there is a change in the direction from which the sound having the largest volume is coming, the area display 342 and the enlargement picture 371 are concurrently changed in accordance with the direction from which the sound is coming. In this configuration, the situation of the conference can be grasped appropriately because, even if a speaker is changed, a direction toward the speaker is enlarged for continuous display while the entire scene is being displayed.

When the display mode of the monitor 300 is the above-mentioned combination display mode II (FIG. 6(A)), by depressing the sub-selection button 412 once, the display modes of the monitor 300 can be switched over to a combination display mode III for displaying a combination picture 380 illustrated in FIG. 6(B). The combination picture 380 is a picture in which two pictures, namely, 2-way-split part pictures 381A and 381B are displayed in addition to the reduction picture 340.

The 2-way-split part pictures 381A and 381B are pictures corresponding to areas specified by two area displays 343A and 343B which are displayed by being overlaid on the reduction picture 340 and each exhibit substantially a fan shape of an arch shape. The 2-way-split part picture 381A corresponds to the area display 343A, while the 2-way-split part picture 381B corresponds to the area display 343B.

In the reduction picture 340, the area displays 343A and 343B are set symmetrically on both sides of the optical axis of the photographic lens 221 so as to each include a picture of a given subject within such a range that, for example, the angle of view in the perimeter-to-center direction perpendicular to the optical axis of the photographic lens 221 is 60 degrees while the angle of view in the circumferential direction about the optical axis is 110 degrees. In other words, the pictures of the 2-way-split part pictures 381A and 381B are panoramic pictures that extend along the left-to-right direction with the angle of view of 60 degrees in the perimeter-to-center direction perpendicular to the optical axis of the photographic lens 221 and the angle of view of 110 degrees in the left-to-right direction in positions that are symmetrical with respect to the optical axis of the photographic lens 221. The area displays 343A and 343B may correspond to positions that are not only symmetrical with respect to the optical axis but also adjacent to each other.

By the rotation operation of the ball-type switch 413, the area displays 343A and 343B are set to be able to move to arbitrary positions in the circumferential direction of the reduction picture 340. The 2-way-split part pictures 381A and 381B are obtained by cutting out pictures of areas specified by the area displays 343A and 343B, respectively, moved to desired positions by the operation of the ball-type switch 413 (cutout step) and by subjecting the cut-out parts to the correction processing of correcting the distortion aberration due to the photographic lens 221 and to the enlargement processing, and are displayed in full on top and bottom of the display screen of the monitor 300, respectively (display step).

Further, while a sound tracking function is activated by depressing the sound tracking switch 414, by again depressing the sub-selection button 412, the direction from which the sound having the largest volume is coming and a direction from which a sound having the second largest volume is coming are automatically extracted by the control section 243, and the area displays 343A and 343B are displayed within the reduction picture 340. The 2-way-split part picture 381A being an enlargement picture is an image of an area toward the direction from which the sound having the largest volume is coming, and the 2-way-split part picture 381B is a picture of an area toward the direction from which the sound having the second largest volume is coming. Note that the 2-way-split part pictures 381A and 381B are set to extend within a range of 55 degrees (110 degrees in total in the reduction picture 340) in the left and right directions across the centers of the respective sounds, but the angle may be set to 90 degrees, 60 degrees, 45 degrees, or the like instead of 110 degrees.

In the same manner as the above-mentioned 2-way-split part pictures 350 and 351, by performing the interpolation processing for pixel data or other such processing on image data of the image-pickup element 230 output from the image compression processing section 242, the 2-way-split part pictures 381A and 381B are generated as pictures obtained by subjecting the picked-up images of the parts corresponding to the area displays 343A and 343B, respectively, to the interpolation processing for a distortion aberration and the enlargement processing. Therefore, the picture displayed on the monitor 300 exhibits less deterioration than in a case where the 2-way-split part pictures 381A and 381B are generated from the picture data on the reduction picture 340 generated by the thinning processing for pixel data.

The reduction picture 340 is displayed on top left of the display screen of the monitor 300. By displaying the 2-way-split part pictures 381A and 381B and the reduction picture 340 together on one screen, the reduction picture 340 makes it possible to watch an overall situation within a range photographed by the photographic lens 221, while the picture obtained by enlargement makes it possible to watch a detailed situation of the photographed range of the area displays 343A and 343B. Further, the area displays 343A and 343B being displayed makes it possible to know a positional relationship of the 2-way-split part pictures 381A and 381B with respect to the reduction picture 340.

When the display mode of the monitor 300 is the above-mentioned combination display mode III (FIG. 6(B)), by depressing the sub-selection button 412 once, the display modes of the monitor 300 can be switched over to a combination display mode IV for displaying a combination picture 390 illustrated in FIG. 6 (C). Note that while the sound tracking function is activated by depressing the sound tracking switch 414, the above-mentioned depression of the sub-selection button 412 means that the sound tracking function is to be canceled, and only the ball-type switch 413 can be operated.

The combination picture 390 is a picture in which four pictures, namely, 4-way-split part pictures 391A, 391B, 391C, and 391D are displayed in addition to the reduction picture 340. The 4-way-split part pictures 391A, 391B, 391C, and 391D are pictures corresponding to areas specified by four area displays 344A, 344B, 344C, and 344D which are displayed by being overlaid on the reduction picture 340 and each exhibit substantially a fan shape of an arch shape.

The 4-way-split part picture 391A corresponds to the area display 344A, the 4-way-split part picture 391B corresponds to the area display 344B, the 4-way-split part picture 391C corresponds to the area display 344C, and the 4-way-split part picture 391D corresponds to the area display 344D. In the reduction picture 340, the area displays 344A, 344B, 344C, and344Daresetsymmetrically at 45-degree intervals about the optical axis of the photographic lens 221 so as to each include a picture of a given subject within such a range that, for example, the angle of view in the perimeter-to-center direction perpendicular to the optical axis of the photographic lens 221 is 50 degrees while the angle of view in the circumferential direction about the optical axis is 90 degrees.

In other words, the pictures of the 4-way-split part pictures 391A, 391B, 391C, and 391D are panoramic pictures that extend symmetrically about the optical axis of the photographic lens 221 with the angle of view of 50 degrees in the perimeter-to-center direction perpendicular to the optical axis of the photographic lens 221 and the angle of view of 90 degrees in the left-to-right direction. By the rotation operation of the ball-type switch 413, the area displays 344A, 344B, 344C, and 344D are set to be able to move to arbitrary positions in the circumferential direction of the reduction picture 340. The 4-way-split part pictures 391A, 391B, 391C, and 391D are enlargement pictures that are obtained by subjecting the pictures of areas specified by the area displays 344A, 344B, 344C, and 344D, respectively, moved to desired positions by the operation of the ball-type switch 413, to the correction processing of correcting the distortion aberration due to the photographic lens 221 and to the enlargement processing so as to be displayed in full on the respective display screens on top, bottom, left, and right of the monitor 300.

In the same manner as the above-mentioned 4-way-split part pictures 360, 361, 362, and 363, by performing the interpolation processing for pixel data or other such processing on the image data of the image-pickup element 230 output from the image compression processing section 242, the 4-way-split part pictures 391A, 391B, 391C, and 391D are generated as pictures obtained by subjecting the picked-up images of the parts corresponding to the area displays 344A, 344B, 344C, and 344D, respectively, to the interpolation processing for a distortion aberration and the enlargement processing. Therefore, the picture displayed on the monitor 300 exhibits less deterioration than in a case where the 4-way-split part pictures 391A, 391B, 391C, and 391D are generated from the picture data on the reduction picture 340 generated by the thinning processing for pixel data.

The reduction picture 340 is displayed on top left of the display screen of the monitor 300. By displaying the 4-way-split part pictures 391A, 391B, 391C, and 391D and the reduction picture 340 together on one screen, the reduction picture 340 makes it possible to watch an overall situation within a range photographed by the photographic lens 221, while the pictures obtained by enlargement make it possible to watch detailed situations of the photographed ranges of the area displays 344A, 344B, 344C, and 344D. Further, the area displays 344A, 344B, 344C, and 344D being displayed make it possible to know positional relationships of the 4-way-split part pictures 391A, 391B, 391C, and 391Dwith respect to the reduction picture 340.

As described above, when the display mode of the monitor 300 is the combination display mode I (FIG. 4 (C) ) , the display modes of the monitor 300 can be switched over each time the sub-selection button 412 is depressed in such an order as the combination display mode II (FIG. 6 (A) ) -> the combination display mode III (FIG. 6 (B)) -> the combination display mode IV (FIG. 6(C))....

Incidentally, when the combination picture 330 (FIG. 4(C)), the combination picture 370 (FIG. 6(A)), the combination picture 380 (FIG. 6 (B) ) , and the combination picture 390 (FIG. 6 (C) ) are to be displayed on the monitor 300, the transfer of the image data from the circuit device 240 to the monitor 300 is performed by transferring the image data on the reduction picture 340 and image data on other pictures (enlargement picture 320, enlargement picture 371, 2-way-split part pictures 381A and 381B, and 4-way-split part pictures 391A, 391B, 391C, and 391D; hereinafter, those pictures are referred to generically as "other pictures") at different timings. This configuration allows transfer time for the image data to be made shorter than in a case where the image data on the reduction picture 340 and the image data on the other pictures are transferred at the same timing.

For example, the above-mentioned other pictures focus on pictures of parts of the reduction picture 340 that displays the entirety of the photographed range, and hence it may be desired to watch changes made within the photographed range in which the other pictures are photographed in real time or consecutively at short time intervals. In such a case, the image data on the other pictures has all frames thereof transferred in real time, while the image data on the reduction picture is transferred at given intervals, for example, every 10 frames.

In contrast, in a case where more changes made in the entirety of the photographed range are focused on than the other pictures on the parts within the photographed range, the image data on the reduction picture 340 may have all frames thereof transferred in real time, while the image data on the other pictures may be transferred at given intervals, for example, every 10 frames.

Further, the image data on the reduction picture 340 and the image data on the other pictures maybe transferred alternately at a predetermined ratio, for example, a ratio of the transfer time of 1 for the image data on the reduction picture 340 to the transfer time of 4 for the image data on the other pictures.

As the operation device 400, a personal computer may be used. In this case, the monitor 300 corresponds to a monitor of the personal computer, and the operation switch 410 corresponds to a keyboard or a mouse of the personal computer. In this case, each of the main selection button 411 and the sub-selection button 412 corresponds to a predetermined key of the keyboard. Further, the area display 342, the area displays 343A and 343B, and the area displays 344A, 344B, 344C, and 344D are moved by using the mouse instead of the ball-type switch 413.

### (Second Embodiment)

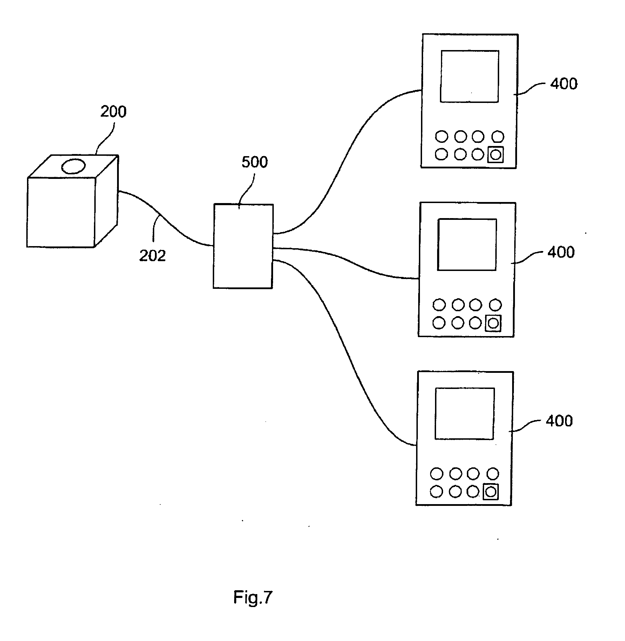

Next, description is made of a second embodiment of the present invention. In this embodiment, as illustrated in FIG. 7, the camera section 200 is connected to a server 500 via the USB cable 202, and a plurality of operation devices 400 (personal computers) are connected to the server 500. In other words, the camera apparatus 100 of this embodiment has a structure in which the plurality of operation devices 400 (personal computers) are connected to the camera section 200. According to such a structure, image data and sound information recorded in a memory 244A can be reproduced by the plurality of operation devices 400 (personal computers).

Note that the camera apparatus 100 may have a structure in which a plurality of the USB connection sections 203 (refer to FIG. 2) are provided on the camera section 200 side, and the plurality of operation devices 400 (personal computers) are directly connected to the camera section 200 without the server 500 provided therebetween. Further, the connection between the camera section 200 and the server 500 or the connection between the camera section 200 and the operation device 400 is not limited to the USB connection, and may be a connection using other connection means such as wireless means.

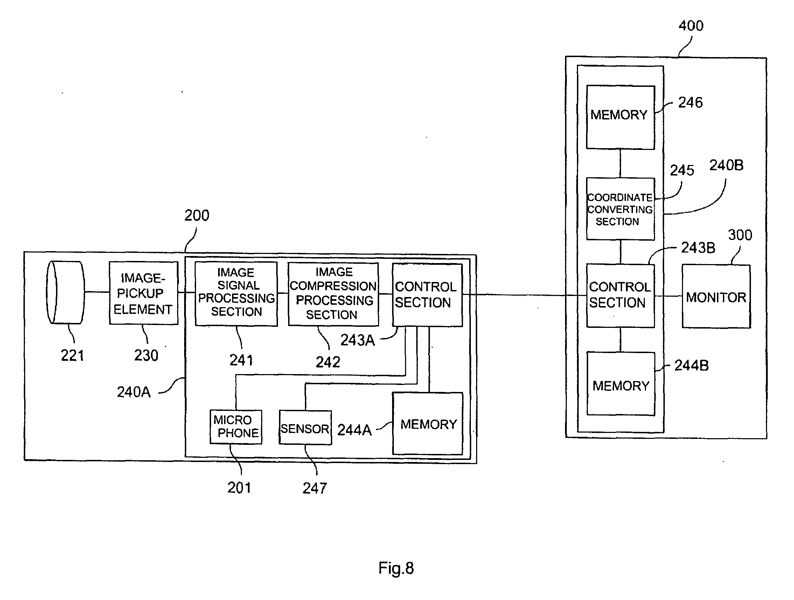

In the case where the plurality of operation devices 400 (personal computers) are thus connected to a single camera section 200, as illustrated in FIG. 8, the configuration of the circuit device 240 may be divided into a circuit device 240A provided on the camera section 200 side and a circuit device 240B provided on an operation device 400 (personal computer) side. That is, the circuit device 240A provided on the camera section 200 side is configured to include the image signal processing section 241, the image compression processing section 242, a control section 243A, the memory 244A, the microphone 201, and a sensor 247. Meanwhile, the circuit device 240B provided on the operation device 400 (personal computer) side is configured to include a control section 243B, a memory 244B, the coordinate converting section 245, and the memory 246.

The coordinate converting section 245 and the memory 246 have the same functions as those described above with reference to Fig. 3. The sensor 247 is a human detection sensor for detecting a moving object, and is made from an infrared sensor. FIG. 8 illustrates only one sensor 247, but in actuality, total four sensors 247 are disposed on four side surfaces of the camera section 200 on a one-to-one basis. Further, the control sections 243A and 243B and the memories 244A and 244B have, as a whole, the same functions as the control section 243 and the memory 244, respectively, described with reference to FIG. 3. However, the processing of generating the picture corresponding to each display mode is mainly performed by the control section 243B, the memory 244B, the coordinate converting section 245, and the memory 246 that are provided to the operation device 400 (personal computer).

With such a configuration, on the operation devices 400 (personal computers), the enlargement picture 320 and the like (2-way-split part pictures 350 and 351, 4-way-split part pictures 360, 361, 362, and 363, 2-way-split part pictures 381A and 381B, and 4-way-split part pictures 391A, 391B, 391C, and 391D; hereinafter, those pictures are referred to generically as "enlargement picture 320 and the like") can be generated from the image data of the image-pickup element 230 output from the image compression processing section 242.

That is, in a case where the camera section 200 is configured to generate various kinds of the enlargement picture 320 and the like based on instructions from the plurality of operation devices 400 (personal computers), the camera section 200 generates various kinds of the enlargement picture 320 and the like. Therefore, the camera section 200 executes an enormous amount of processing works, taking much processing time, which raises a problem that it requires more time to display pictures on the operation devices 400 (personal computers) or other such problem. In contrast, with the configuration in which the control section 243B, the memory 244B, the coordinate converting section 245, and the memory 246 are provided to the operation device 400 (personal computer) side, it is possible to quickly display the enlargement picture 320 and the like that are independently different on each of the operation devices 400 (personal computers).

Note that in the above-mentioned first embodiment, the area toward a direction from which a sound is coming is cut out by the sound tracking switch 414, but here in the second embodiment, when the moving object is detected by the four sensors 247, an area toward a direction thereof is cut out as an enlargement picture. In this case, such control is performed that the image of FIG. 6 (A) is set for one direction, the image of FIG. 6(B) is set for two directions, and the image of FIG. 6 (C) is set for three directions.

It is preferable that the image data transferred from the camera section 200 to the operation devices 400 (personal computers) be image data only on the part corresponding to the area display specified by the operation switch 410 among the image data of the image-pickup element 230. This configuration allows the transfer time for the image data to be made shorter than in a case where all the image data on the images picked up by the image-pickup element 230 are transferred from the camera section 200 to the operation devices 400. Therefore, on the monitor 300 of each of the operation devices 400 (personal computers), in the case of displaying the enlargement picture, the display can be performed smoothly. Note that in the same manner as in the first embodiment, the reduction picture 340 and the image data on the specified area display may be transferred at different timings.

Each of the embodiments of the present invention has been described above, but various changes can be implemented as long as the changes do not depart from the gist of the present invention. For example, each of the above-mentioned embodiments shows the example of performing reproduction after recording, but the present invention can be applied to a case where the image obtained by photographing is reproduced or displayed simultaneously with recording thereof, and a case where the image obtained by photographing is simply displayed without performing the recording thereof.

Further, the image data (original image) on the area display may be image data on the part accurately corresponding to the area display, but there is a case where image data on pixels surrounding the part corresponding to the area display is necessary when the enlargement picture 320 and the like are generated. In such a case, as appropriate, the image data on the pixels surrounding the area may also be transferred along with the image data on the area display.

Note that in a case where the reproduction or displaying is performed simultaneously with the recording on the camera apparatus 100 illustrated in the first embodiment or the second embodiment, the transfer of image data, in other words, transfer of an image of an enlargement-purpose area and/or transfer of a reduced image may be performed when a sound is produced or when the subject makes a move.

For example, in the case of the conference, only the reduction image 340 is normally displayed, and when a speaker appears, an image of an area including the speaker is cut out, and the corresponding part is transferred to the monitor 300 side after having undergone the enlargement processing (first embodiment) or without undergoing the processing (second embodiment). On the monitor 300, the enlargement picture of the area including the speaker and the reduction picture 340 are displayed. Also in the case where the reproduction is performed after the recording, the transfer of reproduction-purpose data to the monitor 300 side can be performed similarly. Further, in the case where the sensor 247 is provided, when a person enters the photographed range, the transfer of the image data may be performed similarly in response to a detection signal from the sensor 247.

As to contents displayed by the monitor 300 in those case, it is preferable to display the reduction picture 340 and the other pictures (enlargement picture 320, enlargement picture 371, 2-way-split part pictures 381A and 381B, and 4-way-split part pictures 391A, 391B, 391C, and 391D) including the direction from which the sound is coming or a moving object (such as a person).

Further, in the case of the 2-way split display mode illustrated in FIG. 5(B) or the combination picture illustrated in FIG. 6(B), an image of a fixed area such as a blackboard may be enlarged and displayed on the top part of each screen, while an image of an area toward the direction from which a sound is coming or an area toward the direction where a person is moving may be enlarged and displayed on the bottom part of each screen. In addition, when a specific area is cut out, enlarged, and displayed by making use of a sound tracking function, a moving object detecting function, and other such functions, only the enlarged image of the specific area may be displayed in full on a screen.

Further, as information for determining the area cut out from the entirety picture 310, there can be employed information including not only a sound and a moving object but also an object that is not moving and a specific person or thing that is previously specified. Further, the three microphones 311, 312, and 313 and the four sensors 247 are exemplified as means for detecting the information, but one sensor and one microphone or two or more (a plurality of) sensors and microphones may be used depending on the purpose and condition. In addition, in the case of the conference, by attaching a microphone to each participant or placing a microphone in front of each person, it is possible to specify the speaker, namely, the area to be cut out.

Further, the description of the first embodiment or the second embodiment has been made by taking the camera apparatus 100 as an example, but the image data picked up by the image-pickup means such as a camera may be recorded on recording means such as a hard disk or a digital versatile disc (DVD), and subjected to the image processing by the circuit device 240 serving as the image processing device so as to be displayed on the monitor 300. In this case, the image processing device (circuit device 240) and the recording means recorded with the image data may be connected to each other via a network.

Further, the image data recorded on the recording means such as a hard disk or a DVD which is separate from or integral with the camera apparatus 100 may be subjected to the image processing using the above-mentioned image processing method by the above-mentioned circuit device 240 so as to display the picture on the monitor 300. In other words, the image pickup is performed by using a wide-angle lens similar to the above-mentioned photographic lens 221, and the circuit device 240 or control processing means similar to the circuit device 240 may subject the image data recorded on the above-mentioned recording means to a reduction picture generating processing of generating the reduction picture 340 and an enlargement picture generating processing of correcting a distortion due to the photographic lens 221 for one or a plurality of parts of the picked-up image and generating the other pictures (enlargement picture 320, enlargement picture 371, 2-way-split part pictures 381A and 381B, and 4-way-split part pictures 391A, 391B, 391C, and 391D) that are subjected to enlargement to become larger than the reduction picture 340, and may perform the processing of displaying the reduction picture 340 and the above-mentioned other pictures on the monitor 300.

## Claims

1. A camera apparatus, comprising:
a camera section including: a wide-angle photographic lens; and image-pickup means on which light from a subject transmitted through the wide-angle photographic lens is imaged;
a microphone for collecting a sound emitted from the subject and/or sounds around the subject;
processing control means for performing an image processing on image data on a picked-up image obtained by imaging the light on the image-pickup means, and recording the image data subjected to the image processing and the sounds collected by the microphone;
display means including a display screen for displaying a picture of the image data subjected to the image processing by the processing control means as well as reproducing the collected sounds; and
operation means for operating the display screen,
wherein the processing control means performs a processing of recording an entirety of the picked-up image and a processing of displaying the picture on the display means by cutting out a specific area or an area toward a direction from which a sound is coming based on the collected sounds or other information from the entirety of the image obtained by photographing.

2. A camera apparatus according to claim 1, wherein the processing control means performs: a reduction picture generating processing of generating a reduction picture that is obtained by displaying the entirety of the picked-up image whose data amount is reduced in a partial area of the display screen; an enlargement picture generating processing of correcting a distortion due to the photographic lens for one or a plurality of parts of the picked-up image and generating an enlargement picture that is subjected to the cutting out and enlargement to become larger than the reduction picture; and control for displaying the reduction picture and the enlargement picture on the display screen.

3. A camera apparatus according to claim 2, wherein the reduction picture is provided with a display indicating a range corresponding to the enlargement picture.

4. A camera apparatus according to any one of claims 1 to 3, wherein:
the cut-out area includes at least 2 areas of: a tracking area that is the area toward the direction from which the sound is coming and that is subject to change in its area according to movement of the sound; and a direction-fixed area toward a direction that is fixed to a specific direction; and
the areas are simultaneously displayed on the display screen.

5. An image recording/reproducing method, comprising:
a recording step of recording an entirety of a picked-up image obtained by photographing by using a wide-angle photographic lens and of recording a sound collected by a microphone;
a cutout step of cutting out an area toward a direction from which the sound is coming based on the collected sounds from the entirety of the image obtained by photographing; and
a display step of correcting a distortion for a limited image of the cut-out area and displaying the limited image as well as reproducing the sound.

6. An image recording/reproducing method according to claim 5, wherein:
the entiretyof the image obtained by photographing corresponds to a circular image having a 360-degree perimeter; and
the limited image corresponds to an enlargement image enlarged by an interpolation processing or the like.
